(19) Europäisches Patentamt
European Patent Office
Office européen des brevets

(11) **EP 3 447 908 B1**

(12) **FASCICULE DE BREVET EUROPEEN**

(45) Date de publication et mention
de la délivrance du brevet:
**07.10.2020   Bulletin 2020/41**

(51) Int Cl.:
***H02S 50/15*** *(2014.01)*

(21) Numéro de dépôt: **18188784.5**

(22) Date de dépôt: **13.08.2018**

(54) **PROCÉDÉ D'ANALYSE QUANTITATIVE D'UNE INSTALLATION COMPRENANT UN MODULE ÉLECTROLUMINESCENT**

QUANTITATIVES ANALYSEVERFAHREN EINER ANLAGE, DIE EIN ELEKTROLUMINESZENZMODUL UMFASST

METHOD FOR QUANTITATIVE ANALYSIS OF A PLANT COMPRISING A LIGHT-EMITTING MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.08.2017   FR 1757876**

(43) Date de publication de la demande:
**27.02.2019   Bulletin 2019/09**

(73) Titulaire: **Electricité de France**
**75008 Paris (FR)**

(72) Inventeurs:
• **EL HAJJE, Gilbert**
  **92200 Neuilly-sur-Seine (FR)**
• **DUPUIS, Julien**
  **77590 BOIS LE ROI (FR)**

(74) Mandataire: **Plasseraud IP**
**66, rue de la Chaussée d'Antin**
**75440 Paris Cedex 09 (FR)**

(56) Documents cités:
**US-A1- 2012 203 494    US-A1- 2015 008 952**

**Description**

DOMAINE DE L'INVENTION

L'invention concerne un procédé d'analyse d'une installation comprenant au moins un module électroluminescent, le module pouvant typiquement être un panneau photovoltaïque. Le procédé d'analyse permet l'établissement d'une cartographie d'une fonction de l'efficacité du transport des charges électriques au sein de l'installation, afin d'identifier des dysfonctionnements du module ou des défauts de connexion dans l'installation, et d'anticiper d'éventuelles défaillances de l'installation. Le document US2012/203494A décrit un procédé d'analyse pour les installations photovoltaïques.

ETAT DE LA TECHNIQUE

La performance électrique d'une installation comprenant un ou plusieurs modules photovoltaïques dépend des deux grandeurs suivantes :

- D'une part, le rendement de conversion du matériau photovoltaïque de la lumière qui lui est incidente, en énergie électrique,
- D'autre part, l'efficacité d'extraction et d'acheminement de l'énergie électrique jusqu'au point de consommation ou de stockage de cette dernière.

Le vieillissement d'une installation photovoltaïque et des modules qui la composent entraine une dégradation simultanée de ces deux grandeurs, mais selon des cinétiques distinctes. De ce fait, il est important de pouvoir découpler ces deux grandeurs pour pouvoir identifier et quantifier les sources de perte de performance de l'installation, et déterminer les mesures correctrices appropriées.

Dans cette optique, il existe plusieurs techniques de contrôle de la performance d'une installation photovoltaïque, qui peuvent par exemple être basées sur une analyse électrique ou optique de l'installation.

Parmi elles, on connaît en particulier la photoluminescence, qui consiste à exciter un module photovoltaïque à l'aide d'une sollicitation lumineuse. A la suite de cette excitation, le module réagit en émettant de la lumière. L'analyse d'une image de la lumière générée par le module permet d'identifier les possibles régions à faible absorption lumineuse et les régions où la qualité du matériau photovoltaïque est médiocre.

Cependant, cette technique n'est pas satisfaisante car elle est d'implémentation complexe pour obtenir une illumination homogène sur l'ensemble du module, et en outre elle n'est pas applicable à l'analyse d'une installation comprenant plusieurs modules.

Enfin, les images de photoluminescence sont acquises en imposant une tension de circuit ouvert au module, ce qui implique qu'aucune information sur l'activité électrique du module ne peut en être déduite.

On connaît également l'électroluminescence comme méthode d'analyse d'un module photovoltaïque. Cette technique consiste à appliquer aux bornes d'une installation photovoltaïque une tension électrique, ou à injecter un courant déterminé dans l'installation, ce qui provoque l'émission de lumière par le module. L'analyse d'une image acquise pendant cette émission lumineuse permet d'identifier d'éventuels défauts pouvant limiter les performances du module, tels que par exemple des fissures ou des dislocations, etc.

La publication d'O. Breitenstein et al. (2010) «Quantitative evaluation of electroluminescence images of solar cells », phys. stat. sol. (RRL), 4: 7-9. doi:10.1002/pssr.200903304, décrit un procédé d'analyse quantitative d'images d'électroluminescence d'un module photovoltaïque.

Dans ce procédé, le module photovoltaïque est modélisé comme un ensemble de résistances connectées en série avec une diode. Deux images d'électroluminescence du module sont acquises avec respectivement deux différences de potentiel distinctes appliquées au module, et ces images sont ensuite traitées pour déterminer la résistance série et le courant de saturation du module.

Ce procédé n'est pas applicable à une installation photovoltaïque comprenant plusieurs modules, du fait du modèle mathématique sur lequel il repose.

De ce fait, il ne permet pas non plus de déterminer l'efficacité de l'acheminement de l'électricité du ou des modules au point de collecte de l'électricité.

PRESENTATION DE L'INVENTION

Au regard de ce qui précède, l'invention a pour but de pallier aux insuffisances de l'art antérieur.

En particulier, un but de l'invention est de proposer une méthode d'analyse quantitative des performances d'une installation électrique pouvant comprendre plusieurs modules photovoltaïques.

Un autre but de l'invention est de permettre simultanément :

- d'une part de quantifier les défaillances électriques lors de l'acheminement de l'énergie électrique au sein de l'installation, et
- d'autre part d'évaluer l'état de vieillissement des modules photovoltaïques de l'installation.

Un autre but de l'invention est d'être d'implémentation simple.

A cet égard, l'invention a pour objet un procédé d'analyse d'une installation électrique comprenant au moins un module électroluminescent, le procédé étant mis en œuvre par un système comprenant au moins une source d'alimentation électrique, une caméra et un calculateur, le procédé comprenant les étapes suivantes :

- acquisition par la caméra d'une première image d'électroluminescence de l'installation, pour une première alimentation électrique fournie à l'installation par la source,
- acquisition par la caméra d'une seconde image d'électroluminescence de l'installation, pour une seconde alimentation électrique fournie à l'installation par la source,
  dans lequel les alimentations électriques fournies à l'installation sont déterminées de sorte que les tensions $V_1$ et $V_2$ d'un terminal d'entrée de l'installation lors de l'acquisition respectivement de la première et de la deuxième image sont liées par la relation :

$$V_1 < V_2 \leq 1.2\,V_1$$

et,

- à partir des images d'électroluminescence acquises, établissement par le calculateur d'une cartographie d'une fonction de l'efficacité du transport des charges électriques au sein de l'installation, ladite fonction étant une combinaison d'au moins une fonction de la qualité de l'acheminement des charges électriques par l'installation, et d'une fonction de la qualité du transport des charges électriques dans le module électroluminescent.

Avantageusement, la fonction de l'efficacité du transport des charges électriques au sein de l'installation est définie par:

$$f_T(x, y) = \left.\frac{\partial I}{\partial I_L(x, y)}\right|_{\partial V_T = 0} = \left.\frac{\partial V(x, y)}{\partial V_T}\right|_{\partial I_L = 0}$$

où :

- $(x,y)$ est un point de l'installation,
- $V(x,y)$ est la tension électrique locale de l'installation,
- $V_T$ est la tension au terminal de l'installation électrique,
- $I_L(x,y)$ est le courant électrique local photogénéré par l'installation,
- et $I$ est le courant électrique au terminal de l'installation électrique.

Avantageusement, la cartographie de la fonction d'efficacité du transport des charges électriques dans l'installation est obtenue par application de l'équation suivante :

$$f_T(x, y) = \frac{\partial \ln(\Phi_{EL}(x, y))}{\partial\left(\dfrac{qV_T}{kT}\right)}$$

où :

- $\Phi_{EL}(x,y)$ est l'intensité de l'image d'électroluminescence du module,
- $q$ est la charge électrique élémentaire,
- $T$ est la température du module,

- $k_B$ est la constante de Boltzmann.

De préférence, la fonction de la qualité de l'acheminement des charges électriques par l'installation est la résistance électrique locale $R_T(x,y)$ dans l'installation, définie par :

$$R_T(x,y) = \frac{\partial V_T - \partial V(x,y)}{\partial j(x,y)}\bigg|_{\partial j_L=0}$$

De préférence, la fonction de la qualité du transport des charges électriques dans le module est la dérivée de la densité de courant locale par rapport à la tension locale $\dfrac{\partial j(x,y)}{\partial V(x,y)}$.

Dans un mode de réalisation, le procédé comprend en outre une étape de calibration absolue des intensités des images d'électroluminescence acquises, et l'établissement d'une cartographie de la fonction de la qualité du transport des charges électriques dans le module, l'établissement de ladite cartographie comprenant les étapes suivantes :

- pour chaque image d'électroluminescence acquise, détermination d'une cartographie du rendement quantique externe du module à partir de l'intensité de l'image d'électroluminescence,
- pour chaque image d'électroluminescence acquise, établissement d'une cartographie de la densité de courant dans le module pour chaque image d'électroluminescence, à partir de la cartographie de rendement quantique externe du module, et
- à partir de la différence d'alimentation électrique fournie à l'installation entre les acquisitions des deux images d'électroluminescence, établissement de la cartographie de la fonction de la qualité du transport des charges électriques.

Dans un mode de réalisation, le procédé d'analyse comprend en outre l'établissement d'une cartographie de la qualité de l'acheminement des charges électriques dans l'installation à partir de la relation :

$$\frac{1}{f_T(x,y)} = 1 + \left( R_T(x,y).\frac{\partial j(x,y)}{\partial V(x,y)} \right).$$

Avantageusement, mais facultativement, les alimentations électriques A1 et A2 fournies à l'installation respectivement lors de l'acquisition des première et deuxième images d'électroluminescence sont des tensions V1 et V2 électriques appliquées aux bornes de l'installation telles que :

$$V_1 < V_2 \leq 1.2\, V_1$$

Dans certains modes de réalisation, l'installation comprend une pluralité de modules photovoltaïques, et le procédé comprend en outre le calcul d'un ratio des valeurs de la fonction de l'efficacité du transport des charges électriques au sein de l'installation calculées pour deux modules distincts et, en fonction du résultat, la détermination d'un dysfonctionnement d'un module ou d'un défaut de connexion dans l'installation.

L'invention a également pour objet un système d'analyse d'une installation électrique comprenant au moins un module électroluminescent, le système comprenant :

- une source d'alimentation électrique de l'installation,
- une caméra adaptée pour acquérir des images d'électroluminescence de l'installation, et
- une unité de traitement comprenant un calculateur,

le système étant caractérisé en ce qu'il est adapté pour la mise en œuvre du procédé selon la description qui précède.

Le procédé selon l'invention permet de cartographier de manière quantitative la performance électrique d'une installation comprenant un ou plusieurs modules électroluminescents, et en particulier d'une installation photovoltaïque. En effet, l'invention prévoit le calcul d'une fonction de l'efficacité du transport des charges électriques dans l'installation, qui est la combinaison :

- d'une part, d'une fonction de la qualité de l'acheminement des charges électriques par l'installation,
- et d'autre part, d'une fonction de la qualité du transport des charges électriques dans le module électroluminescent.

De ce fait, le procédé permet de quantifier les défaillances électriques lors de l'acheminement de l'énergie électrique photovoltaïque au sein de l'installation. Le procédé permet aussi, simultanément, et à l'aide de la même mesure, d'accéder à l'état de vieillissement des modules photovoltaïques de l'installation.

En d'autres termes, l'invention permet donc de déterminer quantitativement et de façon découplée les deux critères de performance d'une installation photovoltaïque : l'efficacité de la génération d'énergie électrique dans les modules, et l'efficacité de l'acheminement électrique dans l'installation.

En outre, le procédé selon l'invention est applicable à une installation comprenant plusieurs modules.

L'implémentation technique de la mesure est simple car elle nécessite seulement l'acquisition de deux images d'électroluminescence de l'installation. Le procédé selon l'invention peut donc être appliqué à différentes configurations d'installation, comme par exemple une installation au sol, en toiture d'un bâtiment, etc.

DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels:

- Les figures 1a et 1b représentent deux exemples de réalisation d'un système d'analyse d'une installation électrique,
- La figure 2 représente schématiquement les principales étapes d'un procédé d'analyse selon un mode de réalisation de l'invention.

DESCRIPTION DETAILLEE D'AU MOINS UN MODE DE REALISATION

*Système d'analyse*

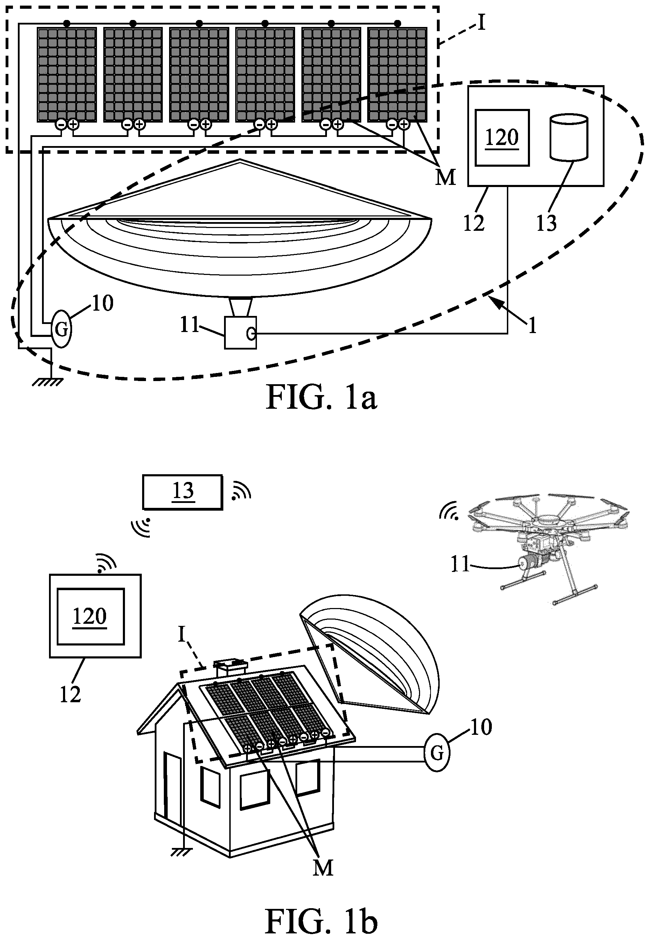

En référence aux figures 1a et 1b, est représenté schématiquement un système d'analyse d'une installation électrique I comprenant au moins un module M électroluminescent. Avantageusement, le ou les module(s) électroluminescent(s) de l'installation sont des modules photovoltaïques. En variante, le module peut être un composant de type diode à électroluminescence (ou LED) d'un montage électronique.

L'installation électrique peut par exemple être une installation photovoltaïque au sol, une centrale photovoltaïque, une installation photovoltaïque en toiture d'une maison individuelle ou d'un immeuble, un ensemble de panneaux photovoltaïques flottants ou intégrés à un bâtiment, etc.

Le système 1 comprend une source d'alimentation électrique 10, adaptée pour fournir une alimentation électrique à l'installation. Avantageusement, la source d'alimentation électrique 10 est un générateur de tension continue. En variante, la source d'alimentation électrique 10 peut aussi être un générateur de courant continu.

Le système 1 comprend une caméra 11, adaptée pour acquérir des images d'électroluminescence du module. La caméra est notamment choisie de manière à pouvoir détecter des longueurs d'ondes dans le domaine d'émission du module électroluminescent. Par exemple, la caméra peut comprendre un détecteur CCD en silicium adaptée pour détecter des longueurs d'ondes dans le domaine du visible ou un détecteur InGaAs pour détecter des longueurs d'ondes dans le domaine de l'infrarouge.

Le système 1 comprend en outre une unité de traitement 12, comprenant un calculateur 120 qui peut être un processeur, un microprocesseur, ou encore un circuit intégré de type FPGA ou ASIC, et qui est configuré pour mettre en œuvre les traitements des images acquises par la caméra.

Le système 1 comprend en outre une mémoire 13 de stockage des images acquises par la caméra. Cette mémoire peut être intégrée à l'unité de traitement ou être localisée à distance de celle-ci.

Les connexions entre la caméra, l'unité de traitement 12 et/ou la mémoire 13 peuvent être réalisées de manière filaire, mais sont plus avantageusement des connexions sans-fil, à distance, via un réseau de télécommunications tel qu'internet.

Sur l'exemple de la figure 1a, le système d'analyse est représenté pour une installation électrique au sol. La caméra peut être positionnée sur un point en hauteur pour surplomber les modules afin d'acquérir les images d'électroluminescence.

Sur l'exemple de la figure 1b, le système d'analyse est représenté pour une installation électrique en hauteur, par exemple en toiture d'un bâtiment d'habitation. La caméra peut dans ce cas être montée sur un drone pour l'acquisition des images d'électroluminescence. Une caméra peut également être portée par un drône pour d'autres types d'installations, par exemple pour une centrale photovoltaïque comprenant des panneaux s'étendant sur une surface importante.

Sur l'exemple de la figure 1b, la caméra communique à distance avec la mémoire 13 pour lui envoyer les images acquises. En variante, les images peuvent être stockées dans une carte mémoire de la caméra, qui est ensuite lue par l'unité de traitement au moyen d'une interface adaptée.

*Procédé d'analyse*

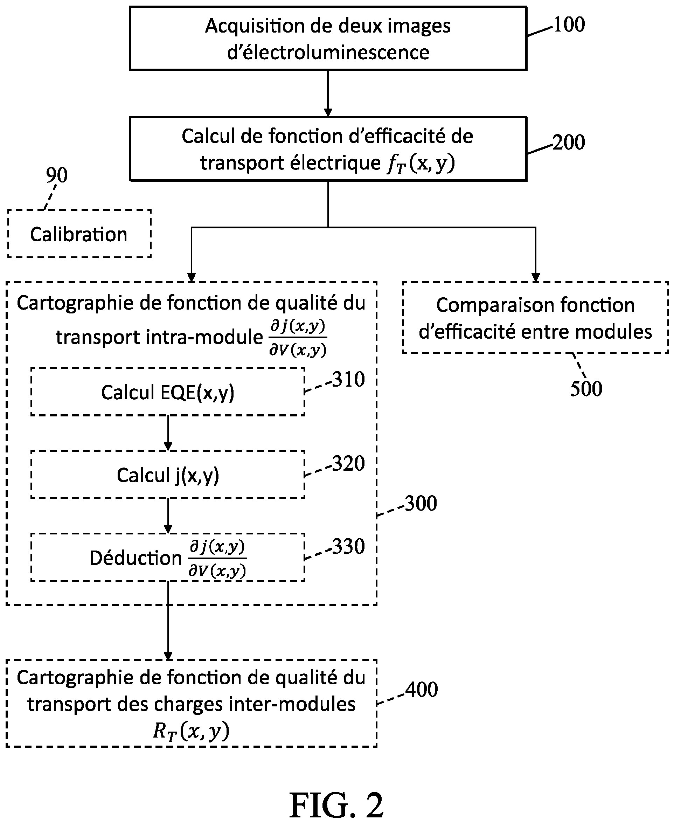

En référence à la figure 2, on va maintenant décrire un procédé d'analyse des performances d'une installation électrique selon un mode de réalisation de l'invention.

Le procédé comprend une première étape 100 d'acquisitions d'images d'électroluminescence de l'installation avec la caméra 11. Pour acquérir une image d'électroluminescence de l'installation, une alimentation électrique est fournie à l'installation grâce à la source 10.

Lors de l'étape 100, deux images sont acquises pour des alimentations électriques fournies légèrement différentes, de manière à pouvoir analyser le changement d'intensité des images d'électroluminescence pour un changement incrémental de tension électrique aux bornes de l'installation électrique.

L'alimentation électrique peut être une tension ou un courant électrique. Elle est adaptée de sorte que la tension $V_1$ au terminal d'entrée de l'installation pour l'acquisition de la première image et la tension $V_2$ au terminal d'entrée de l'installation pour l'acquisition de la deuxième image soient liées par la relation suivante:

$$V_1 < V_2 \leq 1.2\, V_1$$

De manière préférée, l'alimentation électrique fournie à l'installation est une tension, qui est alors égale à $V_1$ et $V_2$ respectivement lors de l'acquisition de chaque image. En variante, dans le cas où l'on injecte un courant dans l'installation, la tension aux bornes de l'installation est avantageusement mesurée simultanément pour vérifier que la relation précédente est respectée.

Le procédé comprend ensuite une étape 200 d'établissement d'une cartographie d'une fonction de l'efficacité du transport des charges électriques au sein de l'installation, cette fonction étant notée $f_T$.

Cette fonction représente la fonction de transport électronique latéral au sein de l'installation, elle est une mesure de l'efficacité de l'acheminement électrique et a par définition, des valeurs comprises entre 0 et 1. Elle comprend donc une double dépendance, sur la qualité du transport électrique dans chaque module d'une part, et sur la qualité du transport des autres éléments de l'installation électrique d'autre part. La fonction $f_T$ peut donc être exprimée comme suit :

$$f_T(x, y) = \left. \frac{\partial I}{\partial I_L(x, y)} \right|_{\partial V_T = 0} \qquad (1)$$

où :

- (x,y) est un point de l'installation,
- $V_T$ est la tension au terminal d'entrée de l'installation électrique,
- $I_L(x,y)$ est le courant électrique local photogénéré par l'installation, qui possède donc une dépendance spatiale, et
- $I$ est le courant électrique au terminal d'entrée de l'installation électrique.

D'après cette notation, la fonction $f_T$ est la fraction du courant $I_L(x,y)$ non perdue et récupérée au terminal de l'installation. Elle traduit donc l'efficacité de l'acheminement électrique au sein de l'installation, cette efficacité devant être maximisée pour garantir un maximum de collecte de courant photogénéré.

De façon réciproque, la fonction $f_T$ peut aussi être exprimée comme suit :

$$f_T(x, y) = \left. \frac{\partial V(x, y)}{\partial V_T} \right|_{\partial I_L = 0} \qquad (2)$$

où $V(x,y)$ est la tension électrique locale de l'installation, qui possède une dépendance spatiale.

La fonction $f_T$ traduit alors le changement en tension électrique locale $V(x,y)$ ressenti par l'installation électrique suite à un changement de la tension $V_T$ appliquée au terminal, et sous un courant de photogénération constant $I_L$.

On définit également une résistance électrique $R_T(x,y)$ locale de l'installation, qui traduit à la fois la dégradation de la capacité d'un module à transporter latéralement les charges électriques, et la dégradation de la capacité de

EP 3 447 908 B1

l'installation électrique à acheminer les charges électriques jusqu'au terminal. Elle est exprimée comme suit :

$$R_T(x,y) = \frac{\partial V_T - \partial V(x,y)}{\partial j(x,y)}\bigg|_{\partial j_L = 0} \qquad (3)$$

$R_T(x,y)$ quantifie donc la perte en tension appliquée au terminal dont la fraction V(x,y) est ressentie par un module situé au point (x,y). L'énergie électrique perdue par résistance transparaît aussi dans $f_T$, de sorte que l'on peut exprimer $R_T(x,y)$ en fonction de $f_T(x,y)$ comme suit :

$$f_T(\mathrm{x},y) = \frac{\partial V(x,y)}{\partial V_T}\bigg|_{\partial i_L} = 0$$

$$f_T(\mathrm{x},y) = \frac{\partial V(x,y)}{\partial j(x,y)} \cdot \frac{\partial j(x,y)}{\partial V_T}$$

$$\frac{1}{f_T(\mathrm{x},y)} = \frac{\partial j(x,y)}{\partial V(x,y)} \cdot \frac{\partial V_T}{\partial j(x,y)}$$

$$\frac{1}{f_T(\mathrm{x},y)} = \frac{\partial j(x,y)}{\partial V(x,y)} \cdot \left( R_T(x,y) + \frac{\partial V}{\partial j(x,y)} \right)$$

$$\frac{1}{f_T(\mathrm{x},y)} = 1 + \left( \frac{\partial j(x,y)}{\partial V(x,y)} \cdot R_T(x,y) \right) \qquad (4)$$

Le terme $\frac{\partial j(x,y)}{\partial V(x,y)}$ représente les changements de densité de courant locale relativement aux changements de tension locale issue de l'application d'une alimentation au terminal.
L'expression ci-avant fait apparaître que la fonction $f_T(x,y)$ est la combinaison de deux fonctions :

- La fonction $R_T(x,y)$ traduit la qualité du transport électrique dans l'installation entre le ou les module(s) et le terminal de l'installation, et

- La fonction $\frac{\partial j(x,y)}{\partial V(x,y)}$ traduit la performance du ou des modules électroluminescent, et donc rend compte d'une éventuelle anomalie ou dégradation de ces modules.

Comme on va le voir, l'exploitation de l'intensité lumineuse émise par les modules sur les images d'électroluminescence permet à la fois de quantifier $\frac{\partial j(x,y)}{\partial V(x,y)}$ et donc d'identifier un point de faible performance dans un ou plusieurs modules, mais aussi de quantifier la résistance $R_T(x,y)$ de chaque module. Les variations de résistance d'un module à l'autre permettent de localiser des dysfonctionnements dans l'acheminement des charges électriques entre les modules.
De retour à l'étape 200 d'établissement d'une cartographie de la fonction $f_T(x,y)$ pour toute l'installation, cette cartographie est obtenue à partir de l'équation suivante :

$$f_T(x,y) = \frac{\partial \ln(\Phi_{EL}(x,y))}{\partial \left( \frac{qV_T}{kT} \right)} \qquad (5)$$

- $\Phi_{EL}(x,y)$ est l'intensité de l'image d'électroluminescence du module,
- $q$ est la charge électrique élémentaire,

7

- $T$ est la température du module,
- $k_B$ est la constante de Boltzmann.

Cette équation est obtenue à partir de l'expression de l'intensité de l'image d'électroluminescence du module $\Phi_{EL}(x,y)$, qui est mesurée à partir des images d'électroluminescence. Cette intensité $\Phi_{EL}(x,y)$ est exponentiellement proportionnelle à la tension appliquée aux bornes du module :

$$\Phi_{EL}(x,y) = C(c,y)\exp\left(\frac{qV(x,y)}{kT}\right)$$

où C(x,y) est une constante de calibration dépendante de l'espace.

On en déduit alors que :

$$V(x,y) = \frac{kT}{q}\ln\left(\frac{\Phi_{EL}(x,y)}{C(x,y)}\right)$$

Et d'après l'équation (2) on obtient :

$$f_T(\mathrm{x},\mathrm{y}) = \frac{\partial\ln(\Phi_{EL}(x,y))}{\partial(\frac{qV_T}{kT})} - \frac{\partial\ln(\mathrm{C}(\mathrm{x},\mathrm{y}))}{\partial(\frac{qV_T}{kT})}$$

Or, pour un matériau photovoltaïque de bonne qualité, les variations de C(x,y) vis-à-vis des changements en tension appliqué sont négligeables car la valeur de C(x,y) devient indépendante du niveau d'injection électrique, ce qui permet donc de négliger le deuxième terme de l'équation précédente.

Grâce à l'expression de $f_T$(x,y) en fonction d'une dérivée de l'intensité d'électroluminescence par rapport à la tension appliquée au terminal de l'installation (équation (5)), il est très simple d'obtenir la cartographie de l'efficacité du transport électrique $f_T$(x,y) à partir des deux images. En effet, en notant $\Phi_{1,EL}$ et $\Phi_{2,EL}$ les intensités respectivement de la première et de la deuxième image d'électroluminescence du module, le calcul de $f_T$(x,y) est mis en œuvre comme suit :

$$f_T(\mathrm{x},\mathrm{y}) = \ln\left(\frac{\Phi_{2,EL}(x,y)}{\Phi_{1,EL}(x,y)}\right)$$

Cela implique également qu'une calibration absolue des images d'électroluminescence n'est pas nécessaire pour calculer $f_T$(x,y).

Avantageusement, mais facultativement, le procédé peut comprendre des étapes supplémentaires pour déterminer, à partir de la cartographie de $f_T$(x,y), une cartographie de $R_T$(x,y) et une cartographie de $\frac{\partial j(x,y)}{\partial V(x,y)}$ à partir de l'équation (4), ce qui permet de décorréler les indications de performance des modules et de l'installation.

Pour mettre en œuvre ces étapes, une étape préliminaire 90 de calibration absolue des intensités des images d'électroluminescence est nécessaire. Cette étape de calibration est nécessaire pour calculer ensuite $R_T$(x,y) mais peut être mise en œuvre à n'importe quel moment avant ce calcul (par exemple avant l'étape 100 ou entre l'étape 100 et l'étape 200).

L'objectif de cette calibration est de déterminer la relation entre le nombre de coups mesurés par la caméra 11 et le nombre de photons effectivement émis par l'objet dont on acquiert l'image. Pour ce faire il faut donc utiliser une source lumineuse d'intensité connue.

Selon un mode de réalisation préféré, une fibre optique est positionnée en sortie d'un laser, en choisissant l'ouverture numérique de la fibre suffisamment faible par rapport à celle de l'objectif de la caméra pour garantir que toute l'intensité lumineuse du laser transmise par la fibre est collectée par la caméra.

Une image de réponse de la caméra est acquise dans les mêmes conditions d'acquisition que les images d'électroluminescence lors de l'étape 100, c'est-à-dire pour un même éclairage ambiant, une même température ambiante, etc. Puis, une image du cœur de la fibre optique est acquise avec la caméra. Simultanément, la puissance lumineuse en sortie de la fibre est mesurée.

L'image du cœur de la fibre est divisée par l'image de réponse de la caméra, ce qui permet de calibrer ensuite spatialement les images d'électroluminescence de l'installation.

Pour calibrer l'intensité lumineuse mesurée dans les images d'électroluminescence, l'image du cœur de fibre est intégrée spatialement, ce qui fournit un nombre de coups (photons détectés) pour le nombre de photons émis par le laser. Une fois ce rapport coups/photons émis déterminé, on peut diviser par ce rapport les images d'électroluminescence acquises à l'étape 100 pour obtenir une valeur absolue de photons.

Lorsque cette calibration est mise en œuvre, le procédé peut comprendre une étape 300 d'établissement d'une cartographie de la fonction $\frac{\partial j(x,y)}{\partial V(x,y)}$ représentative de la qualité du transport des charges électriques dans les modules.

Cette étape 300 comprend une première sous-étape 310 d'établissement d'une cartographie du rendement quantique externe EQE du ou des modules de l'installation, pour chacune des deux images acquises à l'étape 100.

On peut en effet exprimer l'intensité d'une image d'électroluminescence d'un module en fonction de ce rendement quantique externe en appliquant les relations de réciprocité de Rau, décrites dans l'article de U. Rau et al., « Reciprocity relation between photovoltaic quantum efficiency and electroluminescent emission of solar cells », Phys. Rev. B 76, 085303 -2 août 2007, comme suit :

$$\Phi_{EL}(E,x,y) = EQE(E,x,y)\phi_{bb}(E)\left[\exp\left(\frac{qV(x,y)}{kT}\right) - 1\right]$$

Où :

- $\Phi_{EL}(E,x,y)$ est l'intensité d'une image d'électroluminescence,
- E est l'énergie du photon émis,
- $EQE(E,x,y)$ est le rendement quantique externe, et
- $\phi_{bb}(E)$ est le flux du corps noir.

Les images acquises par la caméra sont intégrées spectralement ce qui supprime la dépendance en énergie dans cette équation. On peut donc obtenir par cette équation la cartographie de EQE(x,y) en fonction de l'intensité d'électroluminescence des images.

L'étape 300 comprend ensuite une sous-étape 320 de détermination de la densité de courant dans l'installation en fonction du rendement quantique externe EQE calculé à l'étape 310, pour chacune des deux images acquises à l'étape 100.

Le rendement quantique externe calculé considère une collecte parfaite des paires de porteurs de charges générés au sein de l'installation, c'est-à-dire une fonction $f_T(x,y)$ égale à 1 et une fonction $R_T(x,y)$ négligeable, ce qui n'est pas toujours le cas. On définit donc une version réaliste EQE*(x,y) par rapport à la version idéalisée, définie comme suit :

$$EQE^*(x,y) = EQE(x,y).f_T(x,y)$$

Le courant de court-circuit d'un dispositif photovoltaïque représente le courant maximal que ce dispositif pourrait générer, et s'exprime comme la somme incrémentale des produits entre le rendement quantique externe et le flux de photons incidents sur le dispositif. Par conséquent en remplaçant le rendement quantique externe EQE par le rendement quantique externe réaliste EQE*(x,y), et le flux par la densité de flux solaire, on obtient à la place du courant de court-circuit la densité de courant électrique local :

$$j(x,y) = -q\int_{\lambda_1}^{\lambda_2} EQE^*(x,y)\Phi_{sol}(\lambda)d\lambda \qquad (6)$$

Où:

- q est la charge élémentaire
- $\Phi_{sol}(\lambda)$ est la densité de flux solaire incident sur l'installation,
- $\lambda_1$ et $\lambda_2$ sont les longueurs d'ondes correspondant aux limites respectivement inférieure et supérieure de la capacité de détection de la caméra. Par exemple $\lambda_1$ = 850 *nm* et $\lambda_2$ = 1400 *nm.*

L'étape 300 comprend enfin une sous-étape 330 d'établissement de la cartographie de $\frac{\partial j(x,y)}{\partial V(x,y)}$, qui est obtenue par la différence des fonctions $j(x,y)$ calculées pour les deux images acquises à l'étape 100, et divisée par la différence des tensions dans l'installation.

Le procédé peut ensuite comprendre une étape 400 de détermination de la fonction $R_T(x,y)$ à partir de l'équation (4) et des valeurs calculées de $f_T(x,y)$ et $\frac{\partial j(x,y)}{\partial V(x,y)}$.

Ainsi à l'issue de ces étapes on obtient une cartographie complète et simultanée de :

- L'efficacité de l'acheminement électrique dans l'installation par la fonction $f_T(x,y)$,

- Le vieillissement des modules électroluminescents par la fonction $f_T(x,y)$ et la fonction $\frac{\partial j(x,y)}{\partial V(x,y)}$, et

- Les pertes par résistance électrique entre deux modules de l'installation par $R_T(x,y)$.

En fonction des résultats, on pourra donc repérer d'éventuels dysfonctionnements ou le vieillissement de composants et procéder à une maintenance corrective (remplacement de câbles ou composants électriques défaillants) et/ou préventive (identification des premiers stades de dégradation d'un composant).

En complément, ou en variante dans le cas où une calibration de l'intensité absolue des images n'est pas possible et où l'installation comprend plusieurs modules luminescent, le procédé peut également comprendre une étape 500 de comparaison de la fonction d'efficacité du transport des charges électroniques entre deux modules.

Cette étape peut être mise en œuvre directement en calculant le ratio suivant :

$$\frac{f_T^i(\mathrm{x,y})}{f_T^j(\mathrm{x,y})}$$

Où i et j désignent les numéros des modules électroluminescents.

En variante plus avantageuse, cette étape peut être mise en œuvre en calculant le ratio suivant :

$$\frac{\left(\frac{1}{f_T^i(x,y)}-1\right)}{\left(\frac{1}{f_T^j(x,y)}-1\right)} = \frac{\left(R_T^i(x,y).\frac{\partial j^i(x,y)}{\partial V^i(x,y)}\right)}{\left(R_T^j(x,y).\frac{\partial j^j(x,y)}{\partial V^j(x,y)}\right)}$$

Dans les deux cas, le calcul du terme de gauche permet d'obtenir une cartographie du ratio entre les efficacités de transport électrique au sein des deux modules comparés i et j, qui permet d'établir une première conclusion qualitative sur les différences de performance entre les deux modules.

Par exemple, si les fluctuations observées au sein de la cartographie des ratios sont importants (par exemple >2), on peut en déduire l'existence de l'un des problèmes suivants :

- Défaut de conception d'un module (mauvaise soudure, point chaud),
- Phénomène de dégradation d'un module lié au vieillissement,
- Mauvaise qualité de connexion (connecteurs, boites de jonctions, barres de bus, etc.) de l'installation hors modules.

Cette étape 500 qui est de mise en œuvre plus rapide que les étapes 300 et 400 peut aussi être mise en œuvre avant ces étapes pour réaliser d'abord un premier diagnostic qualitatif. Il est néanmoins préférable de mettre aussi en œuvre les étapes 300 et 400, en particulier si les ratios d'efficacité de transport électrique calculés à l'étape 500 ont des fluctuations faibles.

## Revendications

**1.** Procédé d'analyse d'une installation électrique (I) comprenant au moins un module électroluminescent (M), le procédé étant mis en œuvre par un système comprenant au moins une source d'alimentation électrique (10), une caméra (11) et un calculateur (120), le procédé comprenant les étapes suivantes :

- acquisition (100) par la caméra (11) d'une première image d'électroluminescence de l'installation, pour une première alimentation électrique fournie à l'installation par la source (10),
- acquisition (100) par la caméra (11) d'une seconde image d'électroluminescence de l'installation, pour une seconde alimentation électrique fournie à l'installation par la source (10),

dans lequel les alimentations électriques fournies à l'installation sont déterminées de sorte que les tensions $V_1$ et $V_2$ du terminal d'entrée de l'installation lors de l'acquisition respectivement de la première et de la deuxième image sont liées par la relation :

$$V_1 < V_2 \leq 1.2\, V_1$$

et,

- à partir des images d'électroluminescence acquises, établissement (120) par le calculateur d'une cartographie (200) d'une fonction de l'efficacité du transport des charges électriques au sein de l'installation, ladite fonction étant une combinaison d'au moins une fonction de la qualité de l'acheminement des charges électriques par l'installation, et d'une fonction de la qualité du transport des charges électriques dans le module électroluminescent.

2. Procédé d'analyse selon la revendication 1, dans lequel la fonction de l'efficacité du transport des charges électriques au sein de l'installation est définie par:

$$f_T(x, y) = \left.\frac{\partial I}{\partial I_L(x, y)}\right|_{\partial V_T = 0} = \left.\frac{\partial V(x, y)}{\partial V_T}\right|_{\partial I_L = 0}$$

où :

- (x,y) est un point de l'installation,
- V(x,y) est la tension électrique locale de l'installation,
- $V_T$ est la tension au terminal de l'installation électrique,
- $I_L(x,y)$ est le courant électrique local photogénéré par l'installation,
- et I est le courant électrique au terminal de l'installation électrique.

3. Procédé d'analyse selon l'une des revendications 1 ou 2, dans lequel la cartographie de la fonction d'efficacité du transport des charges électriques dans l'installation est obtenue par application de l'équation suivante :

$$f_T(x, y) = \frac{\partial \ln(\Phi_{EL}(x, y))}{\partial\left(\dfrac{qV_T}{kT}\right)}$$

où :

- $\Phi_{EL}(x,y)$ est l'intensité de l'image d'électroluminescence du module,
- $q$ est la charge électrique élémentaire,
- $T$ est la température du module,
- $k_B$ est la constante de Boltzmann et $V_T$ est la tension au terminal de l'installation électrique.

4. Procédé d'analyse selon l'une des revendications précédentes, dans lequel la fonction de la qualité de l'acheminement des charges électriques par l'installation est la résistance électrique locale $R_T(x,y)$ dans l'installation, définie par :

$$R_T(x,y) = \frac{\partial V_T - \partial V(x,y)}{\partial j(x,y)}\bigg|_{\partial j_L = 0}$$

où $V_T$ et $V$ sont définies comme dans la revendication 2 et j(x,y), $j_L$ est la densité de courant locale photo-générée.

5. Procédé d'analyse selon l'une des revendications précédentes, dans lequel la fonction de la qualité du transport des charges électriques dans le module est la dérivée de la densité de courant locale par rapport à la tension locale

$$\frac{\partial j(x,y)}{\partial V(x,y)}.$$

6. Procédé d'analyse selon l'une des revendications précédentes, comprenant en outre une étape (90) de calibration absolue des intensités des images d'électroluminescence acquises, et l'établissement d'une cartographie (300) de la fonction de la qualité du transport des charges électriques dans le module,
dans lequel l'établissement de ladite cartographie comprend les étapes suivantes :

- pour chaque image d'électroluminescence acquise, détermination (310) d'une cartographie du rendement quantique externe du module à partir de l'intensité de l'image d'électroluminescence,
- pour chaque image d'électroluminescence acquise, établissement (320) d'une cartographie de la densité de courant dans le module pour chaque image d'électroluminescence, à partir de la cartographie de rendement quantique externe du module, et
- à partir de la différence d'alimentation électrique fournie à l'installation entre les acquisitions des deux images d'électroluminescence, établissement de la cartographie (330) de la fonction de la qualité du transport des charges électriques.

7. Procédé d'analyse selon la revendication 6, comprenant en outre l'établissement (400) d'une cartographie de la qualité de l'acheminement des charges électriques dans l'installation à partir de la relation :

$$\frac{1}{f_T(x,y)} = 1 + \left( R_T(x,y) . \frac{\partial j(x,y)}{\partial V(x,y)} \right).$$

où j(x,y), $R_T$(x,y) et V(x,y) sont comme défini dans les revendications 2 et 4.

8. Procédé d'analyse selon l'une des revendications précédentes, dans lequel l'installation (I) comprend une pluralité de modules photovoltaïques (M), et le procédé comprend en outre le calcul (500) d'un ratio des valeurs de la fonction de l'efficacité du transport des charges électriques au sein de l'installation calculées pour deux modules distincts et, en fonction du résultat, la détermination d'un dysfonctionnement d'un module ou d'un défaut de connexion dans l'installation.

9. Système (1) d'analyse d'une installation (I) électrique comprenant au moins un module électroluminescent (M), le système comprenant :

- une source d'alimentation électrique (10) de l'installation,
- une caméra (11) adaptée pour acquérir des images d'électroluminescence de l'installation, et
- une unité de traitement (12) comprenant un calculateur (120),
le système étant **caractérisé en ce qu'**il est adapté pour la mise en œuvre du procédé selon l'une des revendications précédentes.

**Patentansprüche**

1. Analyseverfahren für eine elektrische Anlage (I), die wenigstens ein Elektrolumineszenz-Modul (M) umfasst, wobei das Verfahren durch ein System durchgeführt wird, das wenigstens eine elektrische Energiequelle (10), eine Kamera (11) und einen Rechner (120) umfasst, wobei das Verfahren die folgenden Schritte umfasst:

- Erfassung (100) eines ersten Elektrolumineszenzbilds der Anlage durch die Kamera (11), für eine erste elektrische Energiezufuhr, die der Anlage durch die Quelle (10) geliefert wird;
- Erfassung (100) eines zweiten Elektrolumineszenzbilds der Anlage durch die Kamera (11), für eine zweite elektrische Energiezufuhr, die der Anlage durch die Quelle (10) geliefert wird;
wobei die der Anlage gelieferten elektrischen Energiezufuhren so bestimmt werden, dass die Spannungen $V_1$ und $V_2$ des Anschlusses am Eingang der Anlage bei der Erfassung des ersten bzw. des zweiten Bilds durch die Beziehung

$$V_1 < V_2 \leq 1{,}2\, V_1$$

miteinander verknüpft sind, und
- Erstellung (120) einer Karte (200) einer Funktion der Effizienz des Transports elektrischer Ladungen innerhalb der Anlage mit dem Rechner, ausgehend von den aufgenommenen Elektrolumineszenzbildern, wobei die Funktion eine Kombination ist aus wenigstens einer Funktion der Qualität der Weiterleitung elektrischer Ladungen durch die Anlage und einer Funktion der Qualität des Transports elektrischer Ladungen im Elektrolumineszenz-Modul.

2. Analyseverfahren nach Anspruch 1, wobei die Funktion der Effizienz des Transports elektrischer Ladungen innerhalb der Anlage definiert ist durch:

$$f_T(x, y) = \left.\frac{\partial I}{\partial I_L(x, y)}\right|_{\partial V_T = 0} = \left.\frac{\partial V(x, y)}{\partial V_T}\right|_{\partial I_L = 0}$$

wobei:

- $(x, y)$ ein Punkt der Anlage ist,
- $V(x,y)$ die lokale elektrische Spannung der Anlage ist,
- $V_T$ die Spannung am Anschluss der elektrischen Anlage ist,
- $I_L(x,y)$ der lokale elektrische Strom ist, der durch die Anlage unter Lichteinwirkung generiert wird,
- und $I$ der elektrische Strom am Anschluss der elektrischen Anlage ist.

3. Analyseverfahren nach einem der Ansprüche 1 oder 2, wobei die Karte der Funktion der Effizienz des Transports elektrischer Ladungen in der Anlage durch Anwendung der folgenden Gleichung erhalten wird:

$$f_T(x, y) = \frac{\partial \ln(\Phi_{EL}(x, y))}{\partial\left(\dfrac{qV_T}{kT}\right)}$$

wobei:

- $\Phi_{EL}(x,y)$ die Intensität des Elektrolumineszenzbilds des Moduls ist,
- $q$ die elementare elektrische Ladung ist,
- $T$ die Temperatur des Moduls ist,
- $k_B$ die Boltzmann-Konstante ist, und $V_T$ die Spannung am Anschluss der elektrischen Anlage ist.

4. Analyseverfahren nach einem der vorhergehenden Ansprüche, wobei die Funktion der Qualität der Weiterleitung elektrischer Ladungen durch die Anlage der lokale elektrische Widerstand $R_T(x,y)$ in der Anlage ist, der definiert ist durch:

$$R_T(x,y) = \left.\frac{\partial V_T - \partial V(x,y)}{\partial j(x,y)}\right|_{\partial j_L = 0}$$

wobei $V_T$ und V so wie in Anspruch 2 definiert sind und j(x, y), $j_L$ die lokale unter Lichteinwirkung erzeugte Stromdichte ist

5. Analyseverfahren nach einem der vorhergehenden Ansprüche, wobei die Funktion der Qualität des Transports elektrischer Ladungen in dem Modul die Ableitung der lokalen Stromdichte in Bezug auf die lokale Spannung

$$\frac{\partial j(x,y)}{\partial V(x,y)}$$

ist.

6. Analyseverfahren nach einem der vorhergehenden Ansprüche, ferner umfassend einen Schritt (90) der absoluten Kalibrierung der Intensitäten der aufgenommenen Elektrolumineszenzbilder, und die Erstellung einer Karte (300) der Funktion der Qualität des Transports elektrischer Ladungen in dem Modul, wobei die Erstellung der Karte die folgenden Schritte umfasst:

   - für jedes aufgenommene Elektrolumineszenzbild, Bestimmung (310) einer Karte der externen Quantenausbeute des Moduls, ausgehend von der Intensität des Elektrolumineszenzbilds;
   - für jedes aufgenommene Elektrolumineszenzbild, Erstellung (320) einer Karte der Stromdichte im Modul für jedes Elektrolumineszenzbild, ausgehend von der Karte der externen Quantenausbeute des Moduls, und
   - Erstellung der Karte (330) der Funktion der Qualität des Transports elektrischer Ladungen, ausgehend von dem Unterschied der an die Anlage gelieferten elektrischen Energiezufuhr zwischen den Erfassungen der beiden Elektrolumineszenzbilder.

7. Analyseverfahren nach Anspruch 6, ferner umfassend das Erstellen (400) einer Karte der Qualität der Weiterleitung elektrischer Ladungen in der Anlage, ausgehend von der Beziehung:

$$\frac{1}{f_T(x,y)} = 1 + \left( R_T(x,y).\frac{\partial j(x,y)}{\partial V(x,y)} \right),$$

wobei j(x,y), $R_T$(x,y) und V(x,y) so wie in den Ansprüchen 2 und 4 definiert sind.

8. Analyseverfahren nach einem der vorhergehenden Ansprüche, wobei die Anlage (I) mehrere Photovoltaikmodule (M) umfasst und das Verfahren ferner die Berechnung (500) eines Verhältnisses der Werte der Funktion der Effizienz des Transports elektrischer Ladungen innerhalb der Anlage, die für zwei separate Module berechnet wurden, sowie je nach Ergebnis die Bestimmung einer Fehlfunktion eines Moduls oder eines Verbindungsfehlers in der Anlage umfasst.

9. Analysesystem (1) für eine elektrische Anlage (I), die wenigstens ein Elektrolumineszenz-Modul (M) umfasst, wobei das System umfasst:

   - eine elektrische Energiequelle (10) für die Anlage,
   - eine Kamera (11), die dazu ausgebildet ist, Elektrolumineszensbilder der Anlage aufzunehmen, und
   - eine Verarbeitungseinheit (12) mit einem Rechner (120),
   wobei das System **dadurch gekennzeichnet ist, dass** es für die Durchführung des Verfahrens nach einem der vorhergehenden Ansprüche angepasst ist.

**Claims**

1. A method for analysis of an electrical plant (1) comprising at least one light-emitting module (M), the method being implemented by a system comprising at least one electrical power supply source (10), a camera (11) and a computer (120), the method comprising the following steps:

   - acquiring (100) by the camera (11) a first electroluminescence image of the plant, for a first electrical power supply provided to the plant by the source (10),
   - acquiring (100) by the camera (11) a second electroluminescence image of the plant, for a second electrical power supply provided to the plant by the source (10), wherein the electrical power supplies provided to the plant are determined in such a way that the voltages $V_1$ and $V_2$ of the input terminal of the plant during the acquisition respectively of the first and of the second image are linked by the relationship:

$$V_1 < V_2 < 1.2\ V_1$$

   and,
   - using the electroluminescence images acquired, establishing (120) by the computer a map (200) of a function of the effectiveness of the transport of the electrical charges within the plant, said function being a combination of at least one function of the routing quality of the electrical charges by the plant, and of a function of the transport quality of the electrical charges in the light-emitting module.

2. The method for analysis according to claim 1, wherein the function of the transport effectiveness of the electrical charges within the plant is defined by:

$$f_T(x, y) = \frac{\partial I}{\partial I_L(x, y)}\bigg|_{\partial V_T = 0} = \frac{\partial V(x, y)}{\partial V_T}\bigg|_{\partial I_L = 0}$$

   where:

   - (x,y) is a point of the plant,
   - V(x,y) is the local electrical voltage of the plant,
   - $V_T$ is the voltage at the terminal of the electrical plant,
   - $I_L(x,y)$ is the local electrical current photogenerated by the plant,
   - and I is the electrical current at the terminal of the electrical plant.

3. The method for analysis according to one of claims 1 or 2, wherein the map of the function of transport effectiveness of the electrical charges in the plant is obtained by applying the following equation:

$$f_T(x, y) = \frac{\partial \ln(\Phi_{EL}(x, y))}{\partial\left(\dfrac{qV_T}{kT}\right)}$$

   where:

   - $\Phi_{EL}(x,y)$ is the intensity of the electroluminescence image of the module,
   - $q$ is the elementary electrical charge,
   - $T$ is the temperature of the module,
   - $k_B$ is the Boltzmann constant and $V_T$ is the voltage at the terminal of the electrical plant.

4. The method for analysis according to one of the preceding claims, wherein the function of the routing quality of the electrical charges by the plant is the local electrical resistance $R_T(x,y)$ in the plant, defined by:

$$R_T(x,y) = \frac{\partial V_T - \partial V(x,y)}{\partial j(x,y)}\bigg|_{\partial j_L = 0}$$ where $V_T$ and $V$ are defined as in claim 2 and j(x,y), $j_L$ is the photo-generated local current density.

5. The method for analysis according to one of the preceding claims, wherein the function of the transport quality of the electrical charges in the module is the derivative of the local current density with respect to the local voltage

$$\frac{\partial j(x,y)}{\partial V(x,y)}.$$

6. The method for analysis according to one of the preceding claims, further comprising a step (90) of absolute calibrating of the intensities of the electroluminescence images acquired, and the establishing of a map (300) of the function of the transport quality of the electrical charges in the module,
   wherein the establishing of said map comprises the following steps:

   - for each electroluminescence image acquired, determining (310) a map of the external quantum efficiency of the module using the intensity of the electroluminescence image,
   - for each electroluminescence image acquired, establishing (320) a map of the current density in the module for each electroluminescence image, using the external quantum efficiency map of the module, and
   - using the difference in electrical power supply provided to the plant between the acquisitions of the two electroluminescence images, establishing the map (330) of the function of the transport quality of the electrical charges.

7. The method for analysis according to claim 6, further comprising establishing (400) a map of the routing quality of

$$\frac{1}{f_T(x,y)} = 1 + \left( R_T(x,y).\frac{\partial j(x,y)}{\partial V(x,y)} \right)$$

   the electrical charges in the plant using the relationship: , where j(x,y), $R_T(x, y)$ and V(x,y) are as defined in claims 2 and 4.

8. The method for analysis according to one of the preceding claims, wherein the plant (I) comprises a plurality of photovoltaic modules (M), and the method further comprises calculating (500) a ratio of the values of the function of the transport effectiveness of the electrical charges within the plant calculated for two separate modules and, according to the result, determining a malfunction of a module or of a connection fault in the plant.

9. A system (1) for analysis of an electric plant (I) comprising at least one light-emitting module (M), the system comprising:

   - an electrical power supply source (10) of the plant,
   - a camera (11) adapted to acquire electroluminescence images of the plant, and
   - a processing unit (12) comprising a computer (120),
   the system being **characterised in that** it is adapted to implement the method according to one of the preceding claims.

FIG. 1a

FIG. 1b

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012203494 A

**Littérature non-brevet citée dans la description**

- **O. BREITENSTEIN et al.** Quantitative evaluation of electroluminescence images of solar cells. *phys. stat. sol. (RRL),* 2010, vol. 4, 7-9

- **U. RAU et al.** Reciprocity relation between photovoltaic quantum efficiency and electroluminescent emission of solar cells. *Phys. Rev. B,* 02 Août 2007, vol. 76, 085303